# EUROPEAN PATENT APPLICATION

(11) **EP 0 875 158 A2**
(43) Date of publication of application: **04.11.1998**
(21) Application number: 98201261.9
(22) Date of filing: 20.04.1998
(51) Int. Cl.: A23P 1/08, A21D 13/00

(54) **Semi-finished product as filling for foods, and method for the production of the filled food**

(30) Priority: 18.04.1997 NL 1005848
(71) Applicant: Van Dael, Jacobus Leendert, 1396 KE Baambrugge (NL); Telman, Bernardus Johannes, 1024 HP Amsterdam (NL)
(72) Inventor: Van Dael, Jacobus Leendert, 1396 KE Baambrugge (NL); Telman, Bernardus Johannes, 1024 HP Amsterdam (NL)
(74) Representative: de Bruijn, Leendert C.

(57) **Abstract**

A semi-finished product for use in the production of edible products, for example a filled snack such as a sausage roll, comprises an edible substance, which substance is intended to be included in the snack. The associated method for the production of an edible product, such as a sausage roll, using the tubular semi-finished product, comprises the steps of preparing an edible base product, such as a casing or an envelope made of puff pastry dough, bread dough and the like, dividing the tubular semi-finished product into portions of the substance, removing the envelope, and combining the base product and a portion of the substance.

## Description

The invention relates to the field of the production of foods such as filled snacks, pastries and the like. Products of this type consist of a base, such as a casing or envelope made of puff pastry dough or bread dough for example, or else a flan case, to which a filling or top layer must be added.

The making of such products is a process which comprises three steps, namely making the base product (dough, pastry), making the filling, and putting the base product and the filling together to give the final food. In all these steps the operation must be performed in a manner which complies with the requirements laid down in the Food and Drugs Act and a number of orders and regulations pursuant thereto. Examples are the Food and Drugs Act Order on the Production and Treatment of Foods (BBL) and the Food and Drugs Act Regulations on Food Hygiene.

In various branches of industry, codes have been agreed on the basis of the abovementioned legislation; in the baking industry the code is the Hygiene Code for Bread Baking and Confectionery Baking. This code gives a number of practical conditions which must be satisfied in operations in the bakery in order to be able to maintain the requisite standards of hygiene. These conditions relate *inter alia* to the use of the correct raw materials, refrigeration and freezing, heating the foods to the right temperatures, storage, the cleaning of equipment, etc.

All these requirements, which are needed for maintaining the desired standards of hygiene and excluding health risks, have the result that the production of composite foods, such as sausage rolls, pastries and the like, is labour-intensive. Each of the primary component materials must be prepared separately in compliance with the said requirements, and must also be put together in a correspondingly hygienic manner in a subsequent production step.

The object of the invention is to be able to carry out the manufacture of such products in a more efficient manner, while of course complying with the said requirements concerning hygiene. That object is achieved according to the invention by means of a semi-finished product for use in the production of foods, for example a filled snack such as a sausage roll, which semi-finished product comprises a substance that is intended to be used as a filling for the food and is not completely cooked.

The semi-finished product comprises one of the base materials for the production of a composite product in a ready-to-use form. The requirements concerning hygiene are of course observed in the manufacture of the semi-finished product, which can take place on a large scale in premises specially intended for this purpose, while the substance in question can subsequently be stored and transported well protected in the flexible envelope.

An advantage of such a semi-finished product is that the filling for composite products does not need to be manufactured freshly each time in the bakery itself. The substance which must constitute the filling is combined directly with the base product - which is considerably less labour-intensive.

The semi-finished product according to the invention can be supplied in different ways. According to a first possibility the substance is deep-frozen; according to a second possibility the substance is contained in a flexible envelope. A combination thereof is also possible.

The flexible envelope is preferably closed; the flexible envelope can also be such that it can be cut through together with the substance, so that the desired portions can be obtained in a simple manner.

As has already been stated, the semi-finished product according to the invention can be used for all kinds of products, such as a meat or fish product, a vegetarian product, a confectionery product, etc.

The semi-finished product can thus be used for the production of a wide range of products such as sausage rolls, chicken curry rolls, apple turnovers, doughnuts and comparable products.

The semi-finished product can be in tubular form; the substance can also be divided into portions which are contained in a common envelope.

The invention also relates to a method for the production of a food, such as a sausage roll, using the tubular semi-finished product according to one of the preceding claims, comprising the steps of preparing a base product, such as a casing or an envelope made of puff pastry dough, bread dough and the like, dividing the tubular semi-finished product into portions of the substance, and combining the base product and a portion of the substance.

For some products, such as a sausage roll, the method according to the invention can also include the step of heating the base product with the substance.

The method according to the invention also includes the step of heating the base product with the substance in such a way that both the base product and the substance are cooked.

The invention also relates to a intermediate product prepared by the method described above, comprising a base product made of unbaked and/or unleavened puff pastry dough, bread dough and the like, together with a filling made of the not yet completely cooked substance.

Finally the invention relates to a food, comprising a baked base product made of puff pastry dough bread dough and the like, together with a filling made of the cooked substance.

From FR-A-2497067 a method for the production of foods is known in which a filling in a deep-frozen state is put into a envelope made of dough or bread. The composition is then heated in order to thaw the filling and possibly bake the dough, after which the food is ready. In this known method, however, the filling has already beforehand been made completely fit for consumption - which involves disadvantages with regard to production costs and hygiene.

The invention will now be explained in greater detail by means of a example of an embodiment reproduced in the figures.

Figure 1 shows a tubular semi-finished product according to the invention.

Figure 2 shows a first step in the processing of the semi-finished product.

Figure 3 shows a finished product, such as a sausage roll, made with the tubular semi-finished product according to the invention.

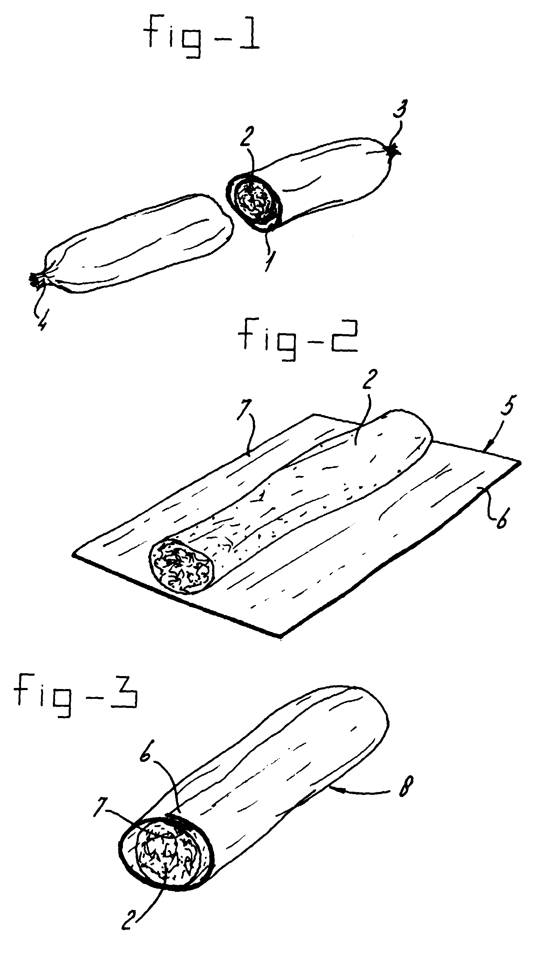

The tubular semi-finished product shown in Figure 1 comprises a envelope 1, in which a not yet completely cooked substance 2, minced for example, is included. The flexible envelope 1, which can for example consist of a plastic and the like, is sealed at both ends 3, 4.

It can be manufactured beforehand and stored for a long time, for example in a frozen state.

In the processing of the tubular semi-finished product according to the invention, the envelope 1 is first removed, after which the filling 2 can be placed for example on a layer of puff pastry dough 5. The layer of puff pastry dough 5 has not yet been baked.

The puff pastry dough 5 is then folded, in such a way that its longer edges 6, 7 are laid on top of each other. The product thus obtained 8, which can be a sausage roll for example, is then placed in an oven and heated. The heating both bakes the puff pastry dough 5 and cooks the filling 2.

In the case of a sausage roll, for example, the filling 2 can consist of a meat product, which by cooking is made fit for consumption at the same time as the dough 5.

In the text, reference is made to a tubular form. This tubular form could also be expressed as a "rope-like" form or a "cord-like" form.

## Claims

1. Semi-finished product for use in the production of foods, for example a filled snack such as a sausage roll, which semi-finished product comprises a substance that is intended to be used as a filling for the food and is not completely cooked.

2. Semi-finished product according to Claim 1, in which the substance is deep-frozen.

3. Semi-finished product according to Claim 1 or 2, in which the substance is contained in a flexible envelope.

4. Semi-finished product according to Claim 3, in which the flexible envelope is closed.

5. Semi-finished product according to Claim 3 or 4, in which the flexible envelope can be cut through together with the substance.

6. Semi-finished product according to one of the preceding Claims, in which the substance comprises a meat, fish, poultry or game product.

7. Semi-finished product according to one of Claims 1-5, in which the substance comprises a vegetarian product.

8. Semi-finished product according to one of Claims 1-5, in which the substance comprises a confectionery product.

9. Semi-finished product according to one of the preceding Claims, in which the form of the substance is tubular.

10. Semi-finished product according to one of the preceding Claims, in which the substance is divided into portions which are contained in a common envelope.

11. Method for the production of foods, such as a sausage roll, using the semi-finished product according to one of the preceding Claims, comprising the steps of preparing a base product, such as a casing or an envelope made of puff pastry dough, bread dough and the like, dividing the tubular semi-finished product into portions of the substance, and combining the base product and a portion of the substance.

12. Method according to Claim 11, comprising the step of removing the envelope before combining the base product and a portion of the substance.

13. Method according to Claim 11, comprising the step of heating the base product with the substance, in such a way that both the base product and the substance are cooked.

14. Intermediate product prepared by the method according to Claim 11 or 12, comprising a base product made of unbaked and/or unleavened puff pastry dough, bread dough ad the like, together with a filling made of the not yet completely cooked substance.

15. Food prepared by the method according to Claim 13, comprising a baked base product made of puff pastry dough, bread dough and the like, together with a filling made of the cooked substance.
